Europäisches Patentamt

European Patent Office

Office européen des brevets

(11) Publication number: **0 363 068**
**A1**

# EUROPEAN PATENT APPLICATION

(21) Application number: 89309820.2

(22) Date of filing: 27.09.89

(51) Int. Cl.⁵: **A01D 34/86**

(30) Priority: 03.10.88 GB 8823173

(43) Date of publication of application:
**11.04.90 Bulletin 90/15**

(84) Designated Contracting States:
**FR GB IT NL**

(71) Applicant: **F.W. McCONNEL LIMITED**
**Temeside Works**
**Ludlow Shropshire SY8 1JL(GB)**

(72) Inventor: **Robertson, Ian**
**77 Downton View**
**Ludlow Shropshire SY1 1JE(GB)**

(74) Representative: **Waite, Anthony William**
**MARKS & CLERK Alpha Tower Suffolk Street**
**Queensway**
**Birmingham B1 1TT(GB)**

(54) **Implement support mechanism.**

(57) A support mechanism for mounting an implement (9) on a vehicle (2) has a pair of parallel arms (5, 10) pivotally mounted at spaced locations on a support (3), the free ends of the arms (5, 10) being connected to an implement carrying boom (6). One of the parallel arms (5, 10) is a ram (10) operable to raise and lower the assembly and a second ram (13) is provided to pivot the boom (6) in order to alter the lateral reach of the mechanism.

FIG 1

Xerox Copy Centre

EP 0 363 068 A1

## IMPLEMENT SUPPORT MECHANISM

This invention relates to a support mechanism for mounting an implement, such as a hedger or mower head, on a carrying vehicle, the support mechanism comprising a system of arms arranged generally in the form of a parallelogram linkage, one end of which is adapted for mounting on the vehicle and the rather end of which carries the implement, and hydraulic rams arranged and operable, in use, to vary the height of the implement relative to the ground and its position laterally of the vehicle.

One conventional support mechanism of this general kind has one arm of the linkage formed by a carrier member pivoted on a frame mountable on the tractor, two further parallel arms being mounted adjacent ends thereof at spaced locations on the carrier member and at their other ends at spaced locations on a fourth arm, an extension of which forms a boom carrying the implement at its free end. A first ram pivots the carrier member relative to the frame to raise and lower the boom and a second ram varies the angular position of one of said further arms relative to the carrier member, causing the parallelogram linkage to vary the position of the boom laterally of the tractor so as to alter the reach of the support mechanism and thereby the lateral positions of the implement relative to the vehicle.

Although this support mechanism works satisfactorily in practice, the number of components required makes it excessively expensive for some applications and it is an object of the invention to provide an implement support mechanism of the aforesaid general kind which is relatively simple and inexpensive to construct.

According to the present invention, a support mechanism for the mounting of an implement on a carrying vehicle comprises a pair of parallel arms pivotally mounted adjacent ends thereof at spaced locations on support means which is adapted for connection to the vehicle, in use, the other ends of the arms being pivotally connected at spaced locations to a boom intended to carry the implement adjacent its free end, a first one of said arms being a first ram operable to raise and lower the assembly to vary the height of the implement relative to the ground, a second ram being provided to pivot the boom relative to said first and second arms to vary the reach of the mechanism laterally of the vehicle.

In one convenient arrangement, the second ram is connected between the second of said arms and said boom, and preferably to a part of the boom remote from the implement extending beyond the pivotal connection between the boom and second arm in a direction away from the implement.

The boom may conveniently be in two parts pivotally interconnected about a transverse axis which extends generally vertically in use, the two boom parts being connected respectively to the cylinder and piston rod of a ram of which the cylinder is hydraulically connected at an adjacent location to a hollow piston rod of said first ram, whereby relative pivotal movement between said boom parts in one direction causes displacement of fluid from the associated ram into said first ram, thereby providing resistance to such pivotal movement and simultaneously causing the first ram to raise the assembly. This arrangement provides a very convenient "break-back" action in the event that the implement encounters an obstacle in use, enabling the implement to yield in a controlled manner to minimise the risk of damage thereto, the simultaneous raising of the assembly enabling the implement to clear the obstacle.

The invention will now be described, by way of example, with reference to the accompanying drawings in which:-

Figure 1 illustrates one form of the implement support mechanism of the invention, mounted on a carrying vehicle, the mechanism being illustrated in full and broken lines respectively in two alternative lateral positions relative to the vehicle;

Figure 2 is a simplified view of the mechanism of Figure 1 with some parts omitted, illustrating the mechanism in two alternative vertical positions relative to the vehicle;

Figure 3 is an enlarged plan view of part of the mechanism of Figures 1 and 2, illustrating a "break-back" device incorporated therein, and

Figure 4 is a side elevation of the part shown in Figure 3.

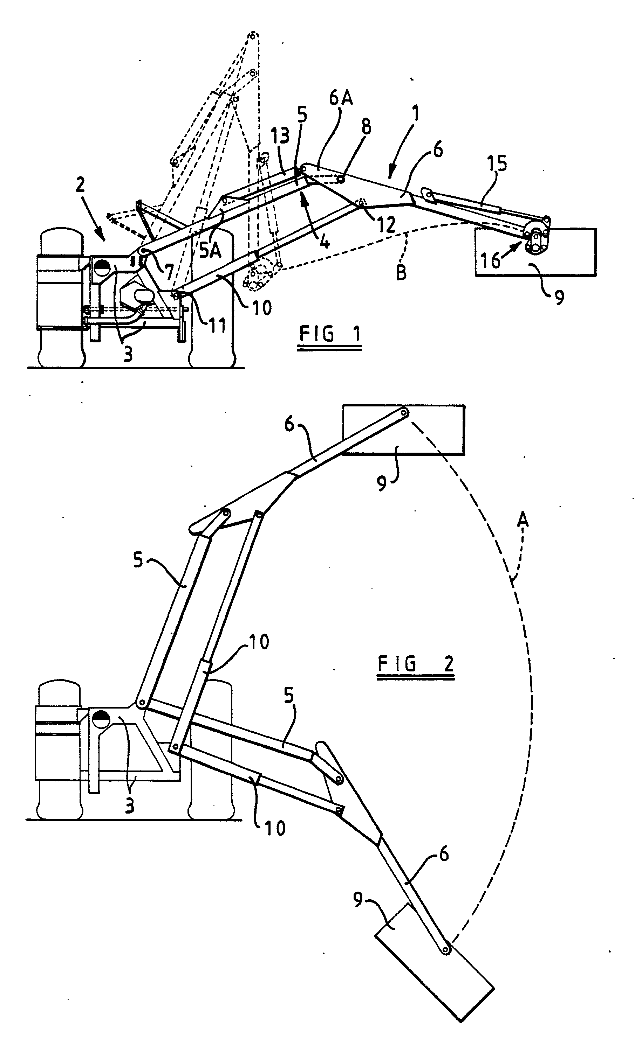

Referring to Figure 1 of the drawings, this illustrates, in full lines, an implement support mechanism, indicated generally at 1, mounted on the rear of a vehicle, such as a tractor, indicated generally at 2. The tractor carries a fixed frame 3, attached, typically, to the tractor 3-point linkage. The mechanism 1 includes a boom, indicated generally at 4, which includes a first arm 5 pivotally connected at 7 adjacent one of its ends, to the frame 3 and having a further pivotal connection 8, adjacent its free end with a second arm 6, to the free end of which is attached an implement 9. The mechanism further comprises a ram 10 which is pivotally connected respectively at locations 11, 12, to the frame 3 and arm 6, the ram extending generally parallel to the arm 5. The arm 5 and ram 10 respectively form the longer arms of a deformable parallelogram, the other arms of which are formed respectively by the frame portion lying between the pivots 7, 11 and the portion of the arm 6 lying between the pivots 8, 12.

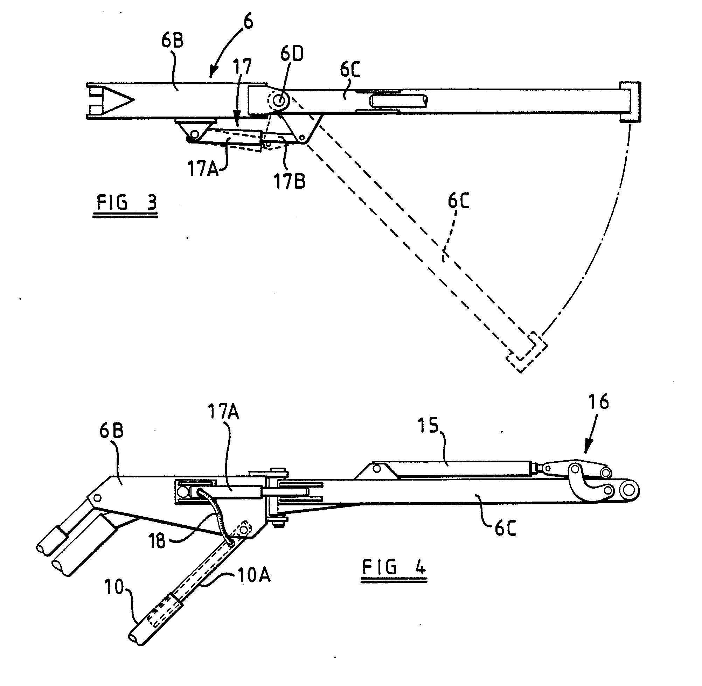

An end portion 6A of the arm 6 extends outwardly beyond the pivotal connection 8 and a ram 13, extending generally parallel to the arm 5, is connected between the free end of the arm portion 6A and a lug 5A rigidly secured to the arm 5. Extension and retraction of the ram 13 causes the arm 6 to pivot relative to the arm 5, thereby to vary the reach of the boom laterally of the tractor. Extension and retraction of the ram 10 has the effect of raising and lowering the boom between the two extreme positions illustrated in Figure 2, the head 9 following the arc A during its movement between these positions.

Figure 1 illustrates in full lines, the condition of the boom 4 with the ram 13 in its retracted position, the boom then being in its condition of maximum reach. The condition of the boom when fully retracted by extension of the ram 13 is shown in broken lines. During its movement from its maximum position laterally outwardly of the tractor, to its fully retracted position the head 9 follows the path designated B in Figure 1, which, because of the parallelogram linkage, deviates to only a small extent from a straight line.

An angling ram 15 is mounted on the arm 6 and connected to the implement by way of an angling mechanism 16 substantially as described in our earlier British Published Specification No. 2192964. Extension and retraction of the ram 15 causes the implement 9 to move angularly in one direction or the other, to enable it to be maintained in a desired orientation relative to a particular cutting position, irrespective of the disposition of the support mechanism.

It will be seen that, by incorporating the ram 10 as one of the arms of the deformable parallelogram linkage, and by mounting both the boom and the ram directly onto the fixed support 3, there results a considerably simplified mechanism, as compared with some proposed hitherto.

It is conventional practice, in mechanisms of this general kind, to incorporate a "break-back" device in order to minimise the risk of damage to the implement and its support mechanism in the event that the implement encounters an obstruction, in use. Generally, such mechanisms enable the boom to yield in a direction opposed to the forward movement of the vehicle and means are sometimes incorporated also to lift the implement to some extent, upon break-back, to enable it more readily to clear the obstruction.

A break-back device is incorporated in the mechanism of the invention and will now be described in more detail with reference to Figures 3 and 4. The boom 16 is formed in two portions 6B, 6C, pivotally interconnected at 6D about a generally vertical axis. A ram 17 is arranged with its cylinder 17A pivotally connected to the boom portion 6B and its piston rod 17B pivotally connected to the boom portion 6C. As can be seen from Figure 4, the piston 1-A of the ram 10 is hollow and communicates with the interior of the ram. A flexible fluid connecting conduit 18 is provided between the cylinder 17A of the ram 17 and the interior of the piston rod 10A to enable fluid displaced from the cylinder 17A to enter the ram 10.

During normal operating conditions, the boom portions 6B, 6C are in longitudinal alignment and the ram 17 is in its extended position illustrated in full lines. When an obstacle is encountered by the implement, the boom portion 6C moves rearwardly about the pivotal connection 6D, as indicated in broken lines, urging the piston rod 17B into the cylinder 17A and thereby displacing fluid from the ram 17 into the ram .10 via the hollow piston rod 10A. This yielding of the boom minimises the risk of damage to the implement and support mechanism from impact with the obstacle. The aforesaid fluid displacement causes the ram 10 to be extended to some extent with a corresponding lifting of the boom 6 which enables the implement 9 to clear the obstacle. Once the implement has moved past the obstacle, the boom will fall under gravity, thereby displacing fluid from the ram 10 back into the ram 17, the latter thereby being extended in order to return the boom portion 6C into its aligned positions with the boom portion 6B. It will be seen that the connection of the ram 17 to the hollow piston rod 10A is advantageous in minimising the length of flexible conduit required in order to form the connection between the rams 10 and 17.

## Claims

1. A support mechanism for the mounting of an implement (9) on a carrying vehicle (2) comprising a pair of parallel arms (5, 10) pivotally mounted adjacent ends thereof at spaced locations on support means (3) which is adapted for connection to the vehicle, in use, the other ends of the arms being pivotally connected at spaced locations to a boom (6) intended to carry the implement adjacent its free end, characterised in that a first one of said arms is a first ram (10) operable to raise and lower the assembly to vary the height of the implement (9) relative to the ground, a second ram (13) being provided to pivot the boom (6) relative to said first and second arms to vary the reach of the mechanism laterally of the vehicle.

2. A mechanism according to Claim 1, characterised in that the second ram (13) is connected between the second (5) of said arms and said boom (6).

3. A mechanism according to claim 1 or claim 2, characterised in that said second ram (13) is connected to a part (6A) of the boom (6) which is remote from the implement (9) and which extends beyond the pivotal connection (8) between the boom and second arm in a direction away from the implement.

4. A mechanism according to any one of the preceding claims, characterised in that the boom (6) is in two parts (6B, 6C) pivotally interconnected about a transverse axis (6D) which extends generally parallel to the plane in which the boom is raised and lowered, the two boom parts being connected respectively to the cylinder (17A) and piston rod (17B) of a ram (17) of which the cylinder (17A) is hydraulically connected to the first ram (10), whereby relative pivotal movement between said boom parts in one direction causes displacement of fluid from the associated ram into said first ram, thereby providing resistance to such pivotal movement and simultaneously causing the first ram to raise the assembly.

5. A mechanism according to Claim 4, characterised in that said cylinder (17A) is connected to said first ram (10) via a hollow piston rod (10A) of the latter.

6. A mechanism according to claim 5, characterised in that said hydraulic connection is by way of a flexible conduit (18).

7. A mechanism according to any one of the preceding claims, characterised in that an angling ram (15) is connected between the second arm (6) and an angling mechanism (16) for carrying the implement (9).

FIG 1

FIG 2

FIG 3

FIG 4

| | DOCUMENTS CONSIDERED TO BE RELEVANT | | EP 89309820.2 |
|---|---|---|---|

| Category | Citation of document with indication, where appropriate, of relevant passages | Relevant to claim | CLASSIFICATION OF THE APPLICATION (Int. Cl.X) 5 |
|---|---|---|---|
| P,A | FR - A1 - 2 614 496 (FERRI S.R.L.) * Page 5, lines 6ff; fig. 3 * | 1,2,7 | A 01 D 34/86 |
| A | DE - A1 - 3 219 553 (JUNG-POPPE, HANS DIETER FELDMANN, HINRICH) * Fig. 1 * | 3 | |
| A | US - A - 4 077 140 (BRANCONI) * Column 2, lines 66ff; fig. 1 * | 4 | |

**TECHNICAL FIELDS SEARCHED (Int. Cl 4)**

A 01 D 34/00
A 01 D 67/00
F 15 B 15/00
F 16 H 21/00
E 02 F  5/00

The present search report has been drawn up for all claims

| Place of search | Date of completion of the search | Examiner |
|---|---|---|
| VIENNA | 16-11-1989 | SCHNEEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82